# FASCICULE DE BREVET EUROPEEN

(11) **EP 1 048 489 B1**
(45) Date de publication et mention de la délivrance du brevet: **12.03.2003**
(21) Numéro de dépôt: 00107344.4
(22) Date de dépôt: 05.04.2000
(51) Int. Cl.: B60C 13/02, B60C 3/04, B60C 11/01, B60C 3/06

(54) **Pneumatique pourvu d'une protubérance pour dévier les projections latérales**
Reifen mit einem Vorsprung zur Ablenkung von seitlichen Spritzern
Tyre with a protuberance for lateral splashes deflection

(30) Priorité: 29.04.1999 FR 9905590
(43) Date de publication de la demande: 02.11.2000
(73) Titulaire: Sociéte de Technologie Michelin, 63000 Clermont-Ferrand Cedex 09 (FR); MICHELIN RECHERCHE ET TECHNIQUE S.A., CH-1763 Granges-Paccot (CH)
(72) Inventeur: Garnier de Labareyre, Bertrand, 63400 Chamalieres (FR)
(74) Mandataire: Diernaz, Christian

(56) Documents cités:
- FR-A- 1 266 628
- FR-A- 2 214 602
- FR-A- 2 336 266
- US-A- 4 356 985
- US-A- 4 926 918
- PATENT ABSTRACTS OF JAPAN vol. 018, no. 453 (M-1662), 24 août 1994 (1994-08-24) & JP 06 143931 A (SUMITOMO RUBBER IND LTD), 24 mai 1994 (1994-05-24)

## Description

L'invention concerne les pneumatiques pour véhicules routiers de type poids lourd et en particulier ceux des pneumatiques qui sont pourvus d'un dispositif pour dévier les projections latérales d'eau lorsqu'un véhicule équipé desdits pneumatiques roule sur une chaussée recouverte d'eau.

Lors d'un roulage par temps de pluie, les manoeuvres de dépassement et de croisement avec un véhicule poids lourd sont souvent très délicates compte tenu des quantités importantes d'eau qui sont projetées latéralement par ledit véhicule et qui, en atteignant les pare-brise des véhicules de tourisme, réduisent considérablement la visibilité. Il est connu depuis longtemps, par exemple dans le document de brevet **FR 1 266 628,** de pourvoir les flancs des pneumatiques pour avions d'éléments en saillie s'étendant dans la direction circonférentielle sur la surface extérieure desdits pneumatiques. Ces éléments forment des protubérances dont le rôle est de dévier la trajectoire du flux de liquide projeté afin d'éviter que ce flux ne soit projeté trop haut vers les réacteurs.

Un pneumatique pour poids lourd est en général composé de deux bourrelets destinés à être en contact avec une jante de montage, d'un sommet pourvu d'une bande de roulement présentant une surface de roulement destinée à venir en contact avec le sol pendant le roulage et de deux flancs assurant la liaison entre cette bande de roulement et les bourrelets.

Un tel pneumatique est renforcé par une armature de carcasse s'étendant d'un bourrelet à l'autre et une armature de renforcement du sommet située radialement à l'extérieur de l'armature de carcasse, cette armature de sommet comprenant au moins deux nappes de renforts empilées c'est-à-dire placées les unes sur les autres. Chaque nappe de l'armature de sommet est en général composée d'une pluralité de renforts disposés de manière à faire un angle allant de **0°** à **70°** avec la direction circonférentielle, mais il n'est cependant pas exclu que l'angle des renforts puisse être supérieur à **70°.**

La bande de roulement d'un pneumatique poids lourd est pourvue d'une sculpture formée d'éléments de relief délimités par des découpures (rainures et/ou incisions) destinées à assurer, entre autres, au pneumatique des performances d'adhérence sur route mouillée.

Le pneumatique présente un encombrement de largeur maximale **L** mesuré au niveau de ses flancs lorsqu'il est monté sur sa roue de montage et soumis à ses conditions nominales d'utilisation de pression et de charge (**L** représente la distance maximale entre les points des flancs axialement les plus éloignés).

Il a été observé qu'en suivant les règles usuelles d'ajout d'une protubérance sur l'un des flancs de ce pneumatique associé au caractère hystérétique des mélanges de caoutchouc composant la bande de roulement et le sommet, il se produisait un échauffement desdits mélanges au voisinage des extrémités des nappes de renfort du sommet. En particulier, le mélange de caoutchouc servant de découplage entre les extrémités des nappes de travail travaille à des températures élevées conduisant à une évolution des caractéristiques dudit mélange et à des décollages ou ruptures dans ce mélange de découplage.

Le pneumatique selon l'invention a pour objectif de concilier une bonne déviation du flux de liquide projeté latéralement pendant un roulage sur sol recouvert d'eau sans occasionner d'augmentation de la température de fonctionnement du pneumatique dans la bande de roulement et en particulier au voisinage des extrémités des nappes de renfort du sommet.

Dans ce but le pneumatique pour poids lourd selon l'invention comprend :
- deux bourrelets destinés à être en contact avec une jante de montage,
- un sommet pourvu d'une bande de roulement présentant une surface de roulement destinée à venir en contact avec le sol pendant le roulage,
- deux flancs assurant la liaison entre cette bande de roulement et les bourrelets,
- une armature de carcasse s'étendant d'un bourrelet à l'autre,
- une armature de renforcement du sommet située radialement à l'extérieur de l'armature de carcasse, cette armature de sommet comprenant au moins deux nappes superposées, chaque nappe étant pourvue de renforts sous la forme de fils ou câbles,
- une protubérance faisant saillie sur au moins l'un des flancs, cette protubérance étant limitée par une paroi supérieure située radialement à l'extérieur et une paroi inférieure située radialement à l'intérieur, l'intersection desdites parois se faisant suivant une ligne joignant les points **C** de cette protubérance situés axialement le plus à l'extérieur de ladite protubérance, l'angle α, mesuré dans un plan contenant l'axe du pneumatique, entre la direction axiale et une droite tangente à la fois au bord de la bande de roulement et à la protubérance étant inférieur à **45°.**

Vu en coupe méridienne, le pneumatique selon l'invention est caractérisé en ce que :
- le point d'intersection **C** des profils des parois supérieure et inférieure de la protubérance est situé à une distance du plan équatorial **XX** au plus égale à la moitié de la distance **L** séparant les points **M** des flancs axialement les plus éloignés lorsque le pneumatique est soumis à ses conditions nominales de pression et de charge, et la distance du point **C** à l'axe de rotation est strictement supérieure à la distance desdits points **M** par rapport au même axe,
- le profil supérieur de la protubérance coupe le profil flanc en un point **K**, ledit point étant défini comme l'intersection du profil extérieur du pneumatique avec le prolongement du profil moyen de la dernière nappe de l'armature de sommet,
- l'angle δ entre une première droite **D1** et une deuxième droite **D2** est supérieur ou égal à **60°,** la première droite **D1** étant définie comme la droite passant par le point **K** et tangente au profil supérieur de la protubérance et la deuxième droite **D2** étant définie comme la droite passant par le point **K** et tangente au profil du flanc prolongeant radialement vers l'extérieur le profil supérieur de la protubérance à partir dudit point **K**.

Par profil flanc, on entend le profil comportant les trois parties de profil suivantes :
- partie du profil du flanc reliée à l'un des bourrelets,
- partie du profil du flanc reliée à la surface de roulement de la bande de roulement
- profil extérieur de la protubérance situé entre les deux précédents profils.

De manière surprenante, il a en effet été observé que la position du raccordement de la surface supérieure de la protubérance avec le profil du flanc près de la surface de roulement a une grande incidence sur l'échauffement au dessus et au voisinage des extrémités des nappes de renfort du sommet résultant des sollicitations supportées par un pneumatique pour poids lourd soumis à des conditions nominales d'utilisation.

La solution proposée permet d'optimiser le couple efficacité vis-à-vis des projections latérales d'eau et l'endurance du sommet du pneumatique.

Préférentiellement, et pour ne pas alourdir le pneumatique, seul le flanc prévu pour être monté côté extérieur véhicule est pourvu d'une protubérance selon l'invention.

De façon préférentielle pour obtenir une déviation efficace des projections latérales, l'angle α de la protubérance est compris entre **32°** et **37°.**

Dans la majorité des cas, un pneumatique pour poids lourd est pourvu d'une bande de roulement elle-même pourvue d'une sculpture composée d'une pluralité de découpures dont la profondeur est définie en fonction des performances recherchées et en particulier en fonction de la limite acceptable d'usure de ladite bande. Pour éviter qu'une protubérance équipant un flanc de pneumatique ne vienne frotter le sol pendant le roulage dudit pneumatique et ne diminue de façon très sensible l'efficacité de ladite protubérance à dévier latéralement le flux de liquide, il est judicieux de prévoir que la distance entre la surface de roulement du pneumatique soumis à ses conditions nominales d'utilisation et le point du profil supérieur de chaque protubérance situé radialement le plus à l'extérieur est au moins égale à la profondeur maximale d'usure admissible de la bande de roulement.

L'efficacité de la solution proposée est d'autant plus grande que la partie de bande de roulement située au voisinage de l'extrémité des nappes de travail a la possibilité d'évacuer les calories produites dans cette région durant le roulage du pneumatique. Pour une bonne dissipation des calories produites dans le pneumatique en roulage, il est avantageux de prévoir que le profil supérieur de la protubérance est, à partir du point de raccordement **K** avec le profil flanc, formé d'une première partie curviligne prolongeant ledit profil flanc radialement vers l'intérieur à partir dudit point **K** de façon que ledit profil de la protubérance est, au moins en partie, située radialement à l'intérieur du prolongement du profil moyen de la dernière nappe de sommet.

La direction moyenne du profil flanc radialement à l'extérieur dudit point de raccordement **K** correspond à une direction tangente au flanc et passant par le même point **K**.

L'invention sera mieux comprise à l'aide des variantes de réalisation qui sont décrites au moyen du dessin selon lequel :
- la figure **1** montre une coupe méridienne partielle d'un pneumatique pour poids lourd selon l'invention;
- la figure **2** montre une variante de pneumatique selon l'invention;
- la figure **3** montre une variante selon laquelle la protubérance selon l'invention est pourvue d'une pluralité de trous.

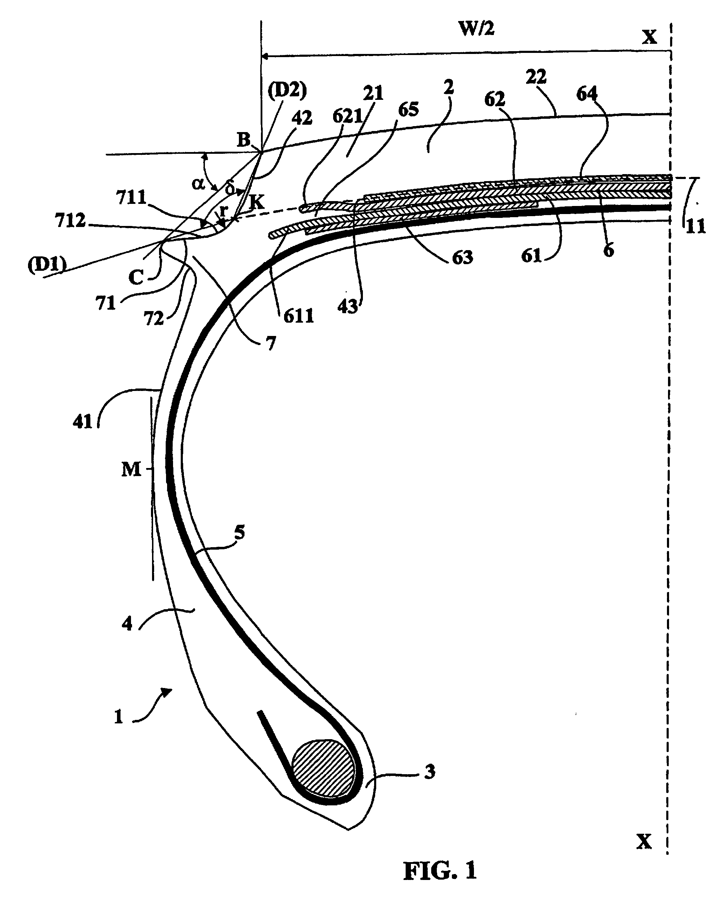

La figure **1** représente une coupe partielle d'un pneumatique pour poids lourd selon l'invention réalisée dans un plan méridien contenant l'axe de rotation dudit pneumatique. Ce pneumatique **1** de dimension **315/70 R 22.5** comprend une région de sommet **2** reliée à une partie de bourrelet **3** par un flanc **4.**

Une armature de carcasse **5** s'étend d'un bourrelet à l'autre et est surmontée radialement à l'extérieur dans la partie de sommet par une armature de renforcement de sommet **6**, elle même composée dans le cas présent de deux nappes de travail **61** et **62** formées chacune par une pluralité de câbles orientés suivant un angle moyen de **18°** par rapport à la direction circonférentielle du pneumatique. Il est en outre prévu :
- une nappe **63,** dite de triangulation, formée d'une pluralité de câbles orientés selon un angle moyen de **65°** avec la direction circonférentielle, entre la première nappe de travail **61** et l'armature de carcasse **5,** et
- une nappe **64,** dite de protection, composée d'une pluralité de câbles orientés selon un angle moyen de **18°** avec la direction circonférentielle, ladite nappe **64** étant placée radialement à l'extérieur des nappes de travail. Cette nappe de protection est la nappe située radialement le plus à l'extérieur de l'armature de sommet et suit un profil moyen **11** circulaire passant à mi épaisseur de ladite nappe.

Pour réduire les contraintes de cisaillement entre les extrémités **611** et **621** respectivement des nappes de travail **61** et **62**, il est prévu une épaisseur **h** de mélange de caoutchouc **65** pour espacer lesdites extrémités.

La structure de renforcement **6** est recouverte radialement à l'extérieur d'une bande de roulement **21** ayant une surface de roulement **22** de largeur axiale **W** présentant, dans le plan de coupe, un profil transversal moyen de forme circulaire dont le point axialement le plus à l'extérieur **B** correspond au point de raccordement avec le profil flanc.

Dans le plan de coupe méridien représenté, le profil du flanc à l'extérieur du pneumatique est constitué des trois parties suivantes :
- une partie **42** quasiment rectiligne prenant naissance au point **B** et s'étendant radialement vers l'intérieur et axialement vers l'extérieur,
- une partie **41** du profil du flanc reliée à l'un des bourrelets **3**,
- le profil extérieur de la protubérance **7** reliant les deux précédentes parties de profil flanc.

Sur le flanc **4**, on distingue une protubérance **7** en saillie vers l'extérieur par rapport au pneumatique. Cette protubérance **7** est dans le cas présent réalisée par moulage au moment du moulage et de la vulcanisation du pneumatique **1**; comme variante, on pourrait prévoir de rapporter par collage cette protubérance sur un flanc de pneumatique moulé sans ladite protubérance.

La protubérance **7** est limitée par une surface supérieure **71** radialement à l'extérieur et par une surface inférieure **72** radialement à l'intérieur, l'intersection desdites deux surfaces se faisant suivant une ligne dont la trace sur le plan de coupe correspond à un point **C** correspondant au point du profil de la protubérance **7** situé le plus à l'extérieur axialement (c'est-à-dire dans une direction parallèle à l'axe de rotation).

Cette protubérance **7** est, dans le plan de coupe, caractérisée par le fait que:
- une droite passant par le point **B** axialement le plus à l'extérieur de la surface de roulement **22** et tangente au profil de la protubérance **7** fait avec la direction axiale un angle α égal à **33**°;
- le profil méridien de la partie supérieure **71** se raccorde au point **K** à la partie rectiligne **42** du flanc par un arc de cercle **711** de rayon r égal à **20** mm, ledit arc **711** se prolongeant axialement vers l'extérieur par une partie curviligne **712** parallèle au profil transversal moyen de la surface de roulement **22** du pneumatique à l'état neuf.

Le point **K** de raccordement est défini comme le point d'intersection du profil flanc avec le prolongement du profil moyen de la dernière nappe **64** de l'armature de sommet; lorsque, comme c'est le cas dans l'exemple décrit, il y plusieurs points d'intersection, le point **K** est le point axialement le plus à l'intérieur.

En outre, la droite **D1** passant par le point **K** et tangente au profil supérieur de la protubérance **7** fait un angle δ de **123°** avec la droite **D2** passant par le point **K** et tangente au profil du flanc prolongeant radialement vers l'extérieur le profil de la protubérance.

Des simulations numériques ont été faites pour comparer le niveau thermique atteint dans le mélange de découplage des extrémités des nappes de travail **61** et **62** dans le cas d'un pneumatique de dimension **315/70 R 22.5** sans protubérance (cas **A**), dans le cas d'un pneumatique de même dimension pourvu d'une protubérance **7** selon l'invention et telle que montrée sur la figure **1** (cas **B**) et enfin dans le cas d'un pneumatique de même dimension pourvu d'une protubérance positionnée de manière que le point de raccordement du profil supérieur de ladite protubérance soit situé 7 mm radialement à l'extérieur du profil moyen prolongé de la dernière nappe de sommet (cas **C**).

Dans le tableau **I** ci-après sont rassemblées les valeurs des températures obtenues pour les trois cas **A, B, C** dans le mélange de découplage pour des conditions de fonctionnement suivantes :
- pression : **8.5** bars,
- charge : **3482** daN
- vitesse de roulage: **80** km/h.

**Tableau I**

| cas **A** | cas **B** | cas **C** |
|---|---|---|
| **96.6**°C | **95.5**°C | **98**°C |

Une deuxième simulation numérique effectuée avec les mêmes variantes **A, B, C** sur un pneumatique de même dimension mais pourvu d'une sculpture différente (**315/70 R 22.5 XDA)** a montré des résultats tout à fait comparables comme le révèle le tableau **II** suivant :

**Tableau II**

| cas **A** | cas **B** | cas **C** |
|---|---|---|
| **110**°C | **107**°C | **112°**C |

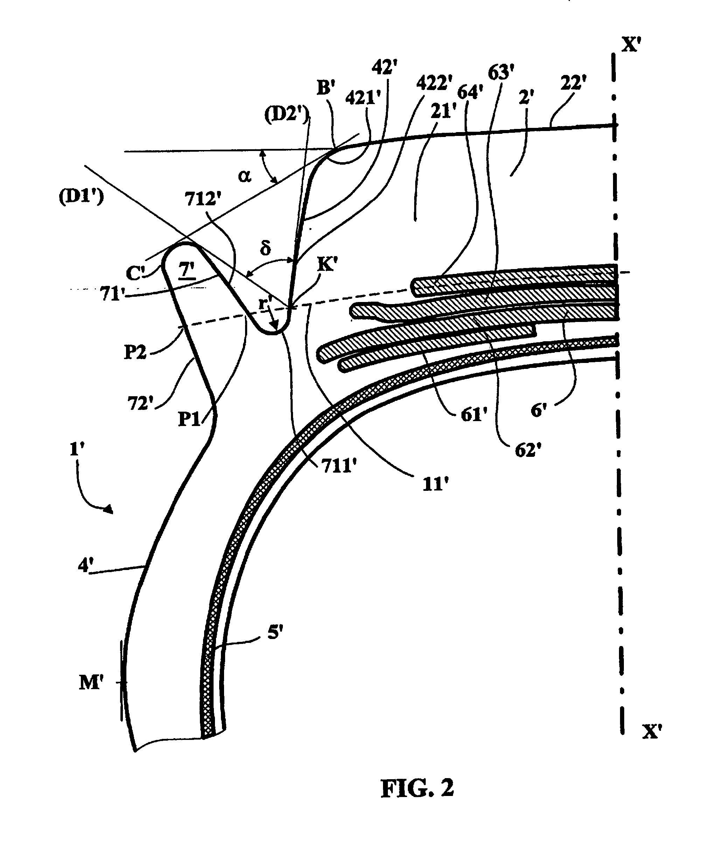

Sur la figure **2**, il est représenté, dans un plan de coupe méridien, une vue partielle d'une variante de pneumatique pour poids lourd selon l'invention.

Le pneumatique **1'** représenté comporte un sommet **2'** renforcé par une armature de carcasse **5'**, une armature de renforcement **6'** surmontée radialement vers l'extérieur par une bande de roulement **21'.** L'armature de renforcement **6'** est constituée par un empilement du même type que celui employé dans la variante décrite avec la figure **1** et comportant quatre nappes **61', 62', 63', 64'.**

La nappe **64'** située radialement le plus à l'extérieur de l'armature de sommet suit un profil moyen **11'** quasiment circulaire et passant à mi épaisseur de ladite nappe.

La surface de roulement **22'** de la bande de roulement **21'** s'étend axialement entre deux points **B'** (correspondant aux points axialement les plus éloignés pouvant venir en contact avec le sol pendant un roulage sous conditions nominales de pression et de charge).

Le profil du flanc **4'** se raccorde à la surface de roulement par une partie supérieure **42'** formée d'une partie courbe **421'** prenant naissance au point **B'** se prolongeant radialement vers l'intérieur par une partie rectiligne **422'** faisant un angle de **35°** avec une direction parallèle à l'axe de rotation.

Une protubérance **7'** est prévue sur l'un des flancs **4'** pour dévier les projections latérales d'eau pendant un roulage sur sol recouvert d'eau. Cette protubérance **7'** présente un profil supérieur **71'** se raccordant au point **K'** sur le profil supérieur **42'** du flanc par un arc de cercle **711'** de rayon **r'**, ledit profil supérieur se prolongeant axialement vers l'extérieur par une partie quasiment rectiligne **712'.** Le point **K'** est défini comme le point d'intersection, axialement le plus à l'intérieur, du profil flanc avec le prolongement du profil moyen **11'** de la dernière nappe **64'** de l'armature de sommet. Dans le cas présenté, le prolongement du profil moyen **11'** avec le profil flanc coupe en outre le profil extérieur de la protubérance en deux autres points **P1** et **P2** situés axialement à l'extérieur par rapport au point **K'.**

Dans le cas d'espèce, l'angle δ entre la droite **D2'** passant par le point **K'** et tangente au profil supérieur **42'** du flanc et la droite **D1'** passant par le même point **K'** et tangente au profil supérieur **71'** de la protubérance **7'** est égal à 60°.

Bien entendu, et pour respecter les cotes d'encombrement maximales auxquelles doit satisfaire le pneumatique, le point **C'** axialement le plus à l'extérieur de la protubérance **7'** est à une distance du plan équatorial **XX** au plus égale à la moitié de la distance **L'** séparant les points **M'** des flancs axialement les plus éloignés lorsque le pneumatique est soumis à ses conditions nominales de pression et de charge. En outre, et pour une efficacité optimale de la protubérance **7'** pour dévier le flux de liquide, la distance du point **C'** à l'axe de rotation est strictement supérieure à la distance desdits points **M'** par rapport au même axe.

Afin d'éviter qu'une protubérance ne vienne en contact avec le sol pendant le roulage et cela quel que soit l'état d'usure de la bande de roulement (avant, toutefois, que celle-ci n'atteigne sa limite légale d'utilisation), il est judicieux de prévoir que le point du profil supérieur de ladite protubérance situé radialement le plus à l'extérieur soit situé, lorsque le pneumatique est écrasé sous ses conditions nominales d'utilisation, à une distance au sol au moins égale à la profondeur maximale admissible d'usure de ladite bande de roulement. Cette profondeur maximale étant en règle générale inférieure à la profondeur maximale des découpures, il est préférable que le point du profil supérieur de chaque protubérance situé radialement le plus à l'extérieur soit distant du sol d'une quantité au moins égale à la profondeur maximale des découpures de la sculpture.

De manière avantageuse, et pour ne pas trop alourdir le pneumatique pourvu d'au moins une protubérance et pour augmenter la ventilation de ladite protubérance, il est intéressant de réaliser sur chaque protubérance une pluralité de trous, chacun desdits trous ne débouchant que sur une seule paroi supérieure ou inférieure de chaque protubérance afin d'éviter que lors d'un roulage sur sol recouvert d'eau, celle-ci puisse passer à travers ladite protubérance.

Avantageusement, chaque protubérance peut être pourvue d'une première série et d'une deuxième série de trous, la première série de trous débouchant uniquement sur la paroi supérieure de ladite protubérance et la deuxième série de trous débouchant uniquement sur la paroi inférieure de ladite protubérance pour augmenter encore la ventilation et par là obtenir un abaissement de la température dans la protubérance et également dans les parties de la bande de roulement au voisinage des extrémités des nappes de sommet.

De façon préférentielle, une excellente ventilation est obtenue en réalisant dans chaque protubérance une pluralité de trous débouchant sur la paroi supérieure et une deuxième pluralité de trous débouchant sur la paroi inférieure, chaque trou de la première série débouchant dans au moins un trou de la deuxième série. Les trous débouchant sur la paroi supérieure de la protubérance sont orientés suivant une première orientation moyenne et les trous débouchant sur la paroi inférieure de la protubérance sont orientés suivant une deuxième orientation moyenne, lesdites directions moyennes étant différentes de façon à limiter l'éventualité du passage d'eau à l'intérieur desdits trous.

La figure montre une vue partielle en perspective d'une variante de pneumatique **1"** selon l'invention pourvu d'une protubérance **7"** comportant des canaux **8"** débouchant à la fois sur la paroi supérieure **71"** et la paroi inférieure **72"** de ladite protubérance **7".** Chaque canal **8"** est constitué d'un premier canal **81"** de section transversale sensiblement circulaire débouchant sur la paroi supérieure **71",** et d'un deuxième canal **82"** également de section transversale circulaire débouchant sur la paroi inférieure **72''**, lesdits deux canaux **81"** et **82"** étant connectés ensemble de manière à former un coude dans le plan de la figure pour empêcher l'eau de circuler facilement à l'intérieur dudit canal (la paroi limitant chaque canal formant écran).

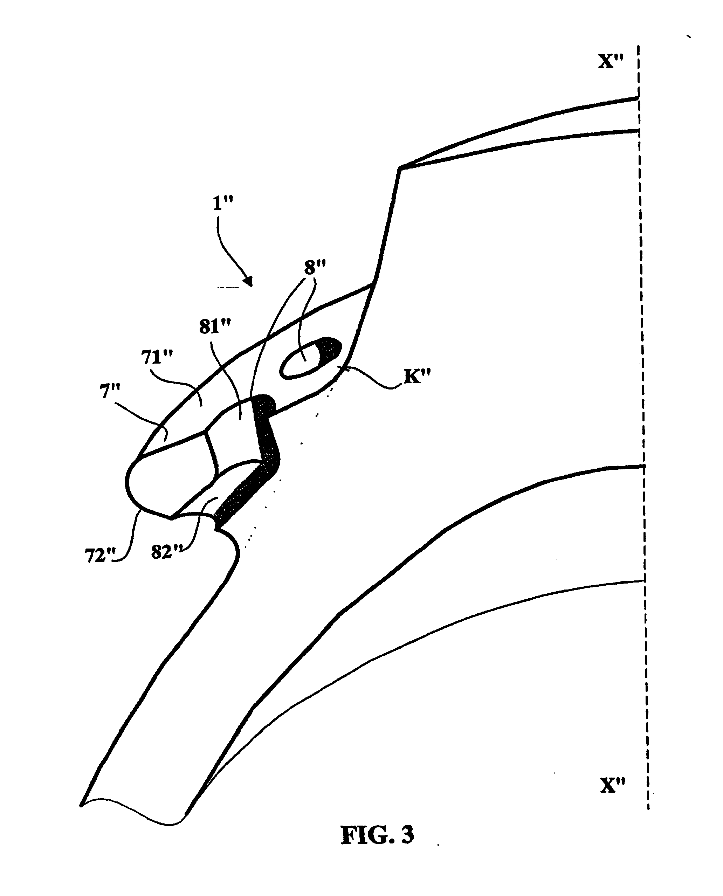

La forme présentée avec cette figure **3** est donnée à titre d'exemple, toute autre forme géométrique pouvant également convenir.

Pour limiter le poids supplémentaire lié à la présence d'une protubérance, celle-ci peut être formée d'une pluralité d'éléments de relief régulièrement espacés dans la direction circonférentielle du pneumatique, la longueur desdits éléments mesurés dans la direction circonférentielle étant au moins égale à la distance séparant chacun desdits éléments dans la direction circonférentielle.

Préférentiellement, seul le côté extérieur d'un pneumatique destiné à être monté sur un véhicule poids lourd est pourvu d'une protubérance selon l'invention. Il peut également être envisagé de n'équiper que l'essieu avant d'un véhicule poids lourd avec un pneumatique pourvu d'une protubérance selon l'invention.

## Revendications

1. Pneumatique **(1,1')** pour véhicule poids lourd comportant :
- deux bourrelets **(3, 3')** destinés à être en contact avec une jante de montage,
- un sommet **(2, 2')** pourvu d'une bande de roulement **(21, 21')** présentant une surface de roulement **(22, 22')** destinée à venir en contact avec le sol pendant le roulage,
- deux flancs **(4, 4')** assurant la liaison entre cette bande de roulement et les bourrelets,
- une armature de carcasse **(5, 5')** s'étendant d'un bourrelet à l'autre,
- une armature de renforcement **(6, 6')** du sommet située radialement à l'extérieur de l'armature de carcasse, cette armature de sommet comprenant au moins deux nappes de travail **(61, 62, 61', 62')** pourvues de renforts,
- une protubérance **(7, 7')** faisant saillie sur au moins l'un des flancs, cette protubérance étant limitée par une paroi supérieure **(71, 71')** radialement à l'extérieur et une paroi inférieure **(72, 72')** radialement à l'intérieur, l'intersection desdites parois se faisant suivant une ligne joignant les points **C** situés axialement le plus à l'extérieur de ladite protubérance, l'angle α entre la direction axiale et une droite tangente à la fois au bord de la bande de roulement et à la protubérance étant inférieur à **45°,**
le pneumatique, vu en coupe méridienne, est **caractérisé en ce que** :
- le point d'intersection **C** des profils des parois supérieure et inférieure **(71, 72, 71', 72')** de la protubérance **(7, 7')** est situé à une distance du plan équatorial **XX** au plus égale à la moitié de la distance **L** séparant les points **M** des flancs axialement les plus éloignés lorsque le pneumatique est soumis à ses conditions nominales de pression et de charge, et la distance du point **C** à l'axe de rotation est strictement supérieure à la distance desdits points **M** par rapport au même axe,
- le profil supérieur de la protubérance coupe le profil flanc en un point **K** défini comme l'intersection du profil extérieur du pneumatique avec le prolongement du profil moyen de la dernière nappe de l'armature de sommet,
- l'angle δ entre une première droite **D1** et une deuxième droite **D2** est supérieur ou égal à **60°**, la première droite **D1** étant définie comme la droite passant par le point **K** et tangente au profil supérieur de la protubérance et la deuxième droite **D2** étant définie comme la droite passant par le point **K** et tangente au profil du flanc prolongeant radialement vers l'extérieur le profil supérieur de la protubérance à partir dudit point **K**.

2. Pneumatique **(1, 1')** pour véhicule poids lourd selon la revendication **1 caractérisé en ce que**, vu dans un plan de coupe méridien contenant l'axe de rotation, la protubérance **(7, 7')** est telle que l'angle α est compris entre **32°** et **37°.**

3. Pneumatique (**1**, **1'**) pour véhicule poids lourd selon la revendication **1** ou la revendication **2 caractérisé en ce que** sa bande de roulement **(21, 21')** est pourvue d'une sculpture formée par une pluralité de découpures et **en ce que** la distance entre la surface de roulement **(22, 22'**) du pneumatique soumis à ses conditions nominales d'utilisation et le point du profil supérieur de chaque protubérance situé radialement le plus à l'extérieur est au moins égale à la profondeur maximale des découpures de la sculpture.

4. Pneumatique (**1**) pour véhicule poids lourd selon la revendication 3 **caractérisé en ce que** le profil supérieur (**71**) de la protubérance (**7**) est, à partir du point de raccordement **K** avec le profil flanc, formé d'un premier arc de cercle **(711)** de rayon r prolongé axialement vers l'extérieur par un profil **(712)** quasiment parallèle au profil moyen transversal de la surface de roulement **(22)** de la bande de roulement **(21).**

5. Pneumatique (**1''**) pour véhicule poids lourd selon l'une des revendications **1** à **4 caractérisé en ce que** chaque protubérance **(7")** est pourvue d'une pluralité de trous **(8"),** chacun desdits trous ne débouchant que sur une seule paroi supérieure ou inférieure de ladite protubérance afin de réduire le poids supplémentaire lié à la présence de ladite protubérance.

6. Pneumatique **(7")** pour véhicule poids lourd selon la revendication **5 caractérisé en ce qu'**une première série **(81")** et une deuxième série **(82")** de trous sont prévues sur au moins une protubérance (**7''**), la première série de trous (**81''**) débouchant uniquement sur la paroi supérieure **(71")** de ladite protubérance et la deuxième série de trous **(82")** débouchant uniquement sur la paroi inférieure (**72''**) de ladite protubérance.

7. Pneumatique pour véhicule poids lourd selon la revendication 6 **caractérisé en ce que** chaque trou **(81")** de la première série débouche dans au moins un trou **(82")** de la deuxième série de trous, les trous débouchant sur la paroi supérieure **(71")** de la protubérance étant orientés suivant une première orientation moyenne et les trous débouchant sur la paroi inférieure (**72''**) de la protubérance étant orientés suivant une deuxième orientation moyenne, lesdites directions moyennes étant différentes de façon à limiter le passage de liquide à l'intérieur desdits trous pendant le roulage.

8. Pneumatique pour véhicule poids lourd selon l'une des revendications **1** à **7 caractérisé en ce qu'**au moins une protubérance est formée d'une pluralité d'éléments de relief régulièrement espacés dans la direction circonférentielle du pneumatique, la longueur desdits éléments mesurés dans la direction circonférentielle étant au moins égale à la distance séparant chacun desdits éléments dans la direction circonférentielle.

9. Pneumatique pour véhicule poids lourd selon l'une des revendications **1** à **8 caractérisé en ce qu'**il est pourvu d'une seule protubérance disposée sur le côté du pneumatique destiné à être placé . côté extérieur d'un véhicule.

10. Pneumatique pour véhicule poids lourd selon l'une des revendications **1** à **9 caractérisé en ce que** le pneumatique est destiné à être monté sur un essieu avant d'un véhicule poids lourd.

## Claims

1. A heavy-vehicle tyre (1, 1'), comprising:
- two beads (3, 3') intended to be in contact with a mounting rim,
- a crown (2, 2') provided with a tread (21, 21') having a running surface (22, 22') intended to come into contact with the ground during travel,
- two sidewalls (4, 4') providing the connection between this tread and the beads,
- a carcass reinforcement (5, 5') extending from one bead to the other,
- a reinforcement armature (6, 6') for the crown, located radially to the outside of the carcass reinforcement, this crown reinforcement comprising at least two working plies (61, 62, 61', 62') provided with reinforcements,
- a protuberance (7, 7') projecting from at least one of the sidewalls, this protuberance being limited by a radially outer upper wall (71, 71') and a radially inner lower wall (72, 72'), the intersection of said walls occurring along a line joining the points C which are located axially farthest to the outside of said protuberance, the angle α between the axial direction and a straight line tangent both to the edge of the tread and to the protuberance being less than 45°.
the tyre, viewed in meridian section, is **characterised in that**:
- the point of intersection C of the profiles of the upper and lower walls (71, 72, 71', 72') of the protuberance (7, 7') is located at a distance from the equatorial plane XX which is at most equal to half the distance L between the points M of the sidewalls which are axially farthest when the tyre is subjected to its rated conditions of pressure and of load, and the distance of the point C from the axis of rotation is strictly greater than the distance of said points M relative to the same axis,
- the upper profile of the protuberance intersects the sidewall profile at a point K, defined as the intersection of the outer profile of the tyre with the extension of the average profile of the last ply of the crown reinforcement,
- the angle δ between a first straight line D1 and a second straight line D2 is greater than or equal to 60°, the first straight line D1 being defined as the straight line passing through the point K and tangent to the upper profile of the protuberance and the second straight line D2 being defined as the straight line passing through the point K and tangent to the profile of the sidewall which extends radially to the outside the upper profile of the protuberance from said point K.

2. A heavy-vehicle tyre (1, 1') according to Claim 1, **characterised in that**, when viewed in a meridian sectional plane containing the axis of rotation, the protuberance (7, 7') is such that the angle α is between 32° and 37°.

3. A heavy-vehicle tyre (1, 1') according to Claim 1 or Claim 2, **characterised in that** its tread (21, 21') is provided with a tread pattern formed by a plurality of cutouts and **in that** the distance between the running surface (22, 22') of the tyre subjected to its rated conditions of use and the point of the upper profile of each protuberance located radially farthest to the outside is at least equal to the maximum depth of the cutouts of the tread pattern.

4. A heavy-vehicle tyre (1) according to Claim 3, **characterised in that** the upper profile (71) of the protuberance (7), starting from the point of connection K with the sidewall profile, is formed of a first arc of a circle (711) of radius r extended axially towards the outside by a profile (712) virtually parallel to the average transverse profile of the running surface (22) of the tread (21).

5. A heavy-vehicle tyre (1") according to one of Claims 1 to 4, **characterised in that** each protuberance (7") is provided with a plurality of holes (8"), each of said holes opening on to only one upper or lower wall of said protuberance in order to reduce the additional weight linked to the presence of said protuberance.

6. A heavy-vehicle tyre (7") according to Claim 5, **characterised in that** a first series (81") and a second series (82") of holes are provided on at least one protuberance (7"), the first series of holes (81") opening solely on to the upper wall (71") of said protuberance and the second series of holes (82") opening solely on to the lower wall (72") of said protuberance.

7. A heavy-vehicle tyre according to Claim 6, **characterised in that** each hole (81") of the first series opens into at least one hole (82") of the second series of holes, the holes opening on to the upper wall (71") of the protuberance being oriented in a first average orientation, and the holes opening on to the lower wall (72") of the protuberance being oriented in a second average orientation, said average directions being different so as to limit the water passing into said holes during travel.

8. A heavy-vehicle tyre according to one of Claims 1 to 7, **characterised in that** at least one protuberance is formed of a plurality of elements in relief regularly spaced apart in the circumferential direction of the tyre, the length of said elements measured in the circumferential direction being at least equal to the distance between each of said elements in the circumferential direction.

9. A heavy-vehicle tyre according to one of Claims 1 to 8, **characterised in that** it is provided with a single protuberance arranged on the side of the tyre intended to be placed on the outer side of a vehicle.

10. A heavy-vehicle tyre according to one of Claims 1 to 9, **characterised in that** the tyre is intended to be mounted on a front axle of a heavy vehicle.

## Patentansprüche

1. Reifen (1, 1') für Lastwagen, mit den folgenden Merkmalen:
- zwei Wülste (3, 3'), die dazu bestimmt sind, mit einer Montagefelge in Berührung zu stehen,
- ein Scheitel (2, 2'), der mit einer Lauffläche (21, 21') versehen ist, die eine Abroll-Oberfläche (22, 22') aufweist, die dazu bestimmt ist, während der Fahrt mit dem Boden in Berührung zu gelangen,
- zwei Flanken (4, 4'), die die Verbindung zwischen dieser Lauffläche und den Wülsten sicherstellen,
- eine Karkassenbewehrung (5, 5'), die sich von einem Wulst zum anderen erstreckt,
- eine Scheitel-Verstärkungsbewehrung (6, 6'), die radial auf der Außenseite der Karkassenbewehrung sitzt, wobei diese Scheitelbewehrung mindestens zwei Arbeitslagen (61, 62, 61', 62') aufweist, die mit Verstärkungen versehen sind, und
- eine Ausstülpung (7, 7'), die auf mindestens einer der Flanken übersteht, wobei diese Ausstülpung durch eine obere Wand (71, 71') radial an der Außenseite und eine untere Wand (72, 72') radial auf der Innenseite begrenzt ist, wobei der Schnitt der genannten Wände längs einer Linie erfolgt, die die Punkte C axial am weitesten an der Außenseite der genannten Ausstülpung zusammenfügt, und wobei der Winkel α zwischen der axialen Richtung und einer Geraden, die eine Tangente gleichzeitig an den Rand der Lauffläche und an die Ausstülpung bildet, kleiner ist als 45°,
wobei der Reifen, im Meridianschnitt gesehen, **dadurch gekennzeichnet ist, daß**:
- der Schnittpunkt C der Profilierungen der oberen und unteren Wand (71, 72, 71', 72') der Ausstülpung (7, 7') in einem Abstand von der Äquatorialebene XX liegt, der höchstens gleich der Hälfte des Abstandes L ist, der die axial am weitesten entfernten Punkte M der Flanken trennt, wenn der Reifen seinen Nennbedingungen an Druck und Last unterzogen ist, und der Abstand des Punktes C von der Drehachse strikt größer ist als der Abstand der genannten Punkte M, auf dieselbe Achse bezogen,
- die obere Profilierung der Ausstülpung die Flankenprofilierung in einem Punkt K schneidet, wobei der genannte Punkt als Schnitt der äußeren Profilierung des Reifens mit der Verlängerung der mittleren Profilierung der letzten Scheitel-Bewehrungslage definiert wird, und
- der Winkel δ zwischen einer ersten Geraden D1 und einer zweiten Geraden D2 größer oder gleich 60° ist, wobei die erste Gerade D1 als die Gerade definiert wird, die durch den Punkt K hindurchläuft und die obere Profilierung der Ausstülpung tangiert, und die zweite Gerade D2 als die Gerade definiert wird, die durch den Punkt K hindurchläuft und die Profilierung der Flanke tangiert, das radial die obere Profilierung der Ausstülpung vom genannten Punkt K aus verlängert.

2. Reifen (1, 1') für ein Lastfahrzeug nach Anspruch 1, **dadurch gekennzeichnet, daß**, in einer Meridian-Schnittebene gesehen, die die Drehachse enthält, die Ausstülpung (7, 7') so ist, daß der Winkel α zwischen 32° und 37° liegt.

3. Reifen (1, 1') für ein Lastfahrzeug nach Anspruch 1 oder Anspruch 2, **dadurch gekennzeichnet, daß** seine Lauffläche (21, 21') mit einem Profil versehen ist, das durch eine Vielzahl von Ausschnitten gebildet ist, und daß der Abstand zwischen der Abroll-Oberfläche (22, 22') des Reifens, der seinen Nennbedingungen der Benutzung unterworfen ist, und dem oberen Punkt der Profilierung einer jeden Ausstülpung, der radial am weitesten außenliegt, mindestens gleich ist der maximalen Tiefe der Ausschnitte des Profils.

4. Reifen (1) für ein Lastfahrzeug nach Anspruch 3, **dadurch gekennzeichnet, daß** die obere Profilierung (71) der Ausstülpung (7), vom Verbindungspunkt K mit der Flankenprofilierung ausgehend, von einem ersten Kreisbogen (711) mit dem Radius r gebildet ist, der axial nach außen durch eine Profilierung (712) verlängert ist, die praktisch parallel zur mittleren Querprofilierung der Abroll-Oberfläche (22) der Lauffläche (21) verläuft.

5. Reifen (1") für ein Lastfahrzeug nach einem der Ansprüche 1 bis 4, **dadurch gekennzeichnet, daß** jede Ausstülpung (7") mit einer Vielzahl von Löchern (8") versehen ist, wobei jedes der genannten Löcher nur auf einer oberen oder unteren Wand der genannten Ausstülpung einmündet, um das zusätzliche Gewicht zu verringern, das mit der Anwesenheit der genannten Ausstülpung verbunden ist.

6. Reifen (7") für ein Lastfahrzeug nach Anspruch 5, **dadurch gekennzeichnet, daß** eine erster Reihe (81") und eine zweite Reihe (82") von Löchern auf mindestens einer Ausstülpung (7") vorgesehen sind, wobei die erste Reihe von Löchern (81") einzig und allein auf der oberen Wand (71") der genannten Ausstülpung einmündet und die zweite Reihe von Löchern (82") einzig und allein auf der unteren Wand (72") der genannten Ausstülpung einmündet.

7. Reifen für ein Lastfahrzeug nach Anspruch 6, **dadurch gekennzeichnet, daß** jedes Loch (81") der ersten Reihe in mindestens ein Loch (82") der zweiten Reihe von Löchern einmündet, wobei die Löcher, die auf der oberen Wand (71") der Ausstülpung einmünden, in einer ersten, mittleren Ausrichtung ausgerichtet sind, und die Löcher, die auf der unteren Wand (72") der Ausstülpung einmünden, in einer zweiten, mittleren Ausrichtung ausgerichtet sind, wobei die genannten, mittleren Richtungen derart unterschiedlich sind, daß der Durchtritt von Flüssigkeit im Inneren der genannten Löcher während der Fahrt begrenzt ist.

8. Reifen für ein Lastfahrzeug nach einem der Ansprüche 1 bis 7, **dadurch gekennzeichnet, daß** mindestens eine Ausstülpung aus einer Vielzahl von vorspringenden Elementen gebildet ist, die in Umfangsrichtung des Reifens regelmäßig beabstandet sind, wobei die Länge der genannten Elemente, in der Umfangsrichtung gemessen, mindestens gleich ist dem Abstand, der die genannten Elemente in Umfangsrichtung trennt.

9. Reifen für ein Lastfahrzeug nach einem der Ansprüche 1 bis 8, **dadurch gekennzeichnet, daß** eine einzige Ausstülpung vorgesehen ist, die auf der Seite des Reifens angeordnet ist, die dazu bestimmt ist, auf der Außenseite eines Fahrzeugs angeordnet zu werden.

10. Reifen für ein Lastfahrzeug nach einem der Ansprüche 1 bis 9, **dadurch gekennzeichnet, daß** der Reifen dazu bestimmt ist, auf einer Vorderachse eines Lastfahrzeuges montiert zu werden.
